# EUROPEAN PATENT APPLICATION

(11) **EP 1 108 803 A2**
(43) Date of publication of application: **20.06.2001**
(21) Application number: 00311151.5
(22) Date of filing: 12.12.2000
(51) Int. Cl.: C23G 1/20, C23G 1/14

(54) **Method and apparatus for removing a coating from a passage hole in a metal substrate**

(30) Priority: 14.12.1999 US 460492
(71) Applicant: GENERAL ELECTRIC COMPANY, Schenectady, NY 12345 (US)
(72) Inventor: Sangeeta, D., Cincinnati, Ohio (US); Johnson, Curtis Alan, Schenectady, New York 12309 (US); Cartier, Thomas Joseph, Scotia, New York 12302-3821 (US); Johnson, Roger Neal, Hagaman, New York 12086 (US)
(74) Representative: Szary, Anne Catherine, Dr.

(57) **Abstract**

A method for removing a coating from the surface of at least one hole in a metal substrate is described. The substrate is treated with a coating removal solution while rapidly agitating the substrate or the solution. Agitation of the substrate can be carried out by the use of a transducer and an associated waveguide. Various types of transducers can be used, e.g., a motor-driven shaking apparatus or an ultrasonic device. The coating removal solution is usually caustic. An article used to remove a coating from holes in a metal substrate is also described.

## Description

This invention generally relates to processes for removing coatings from metal substrates. More specifically, it relates to the removal of coatings from the area within and around holes in the substrate.

Metal alloy components which are exposed to high temperatures (e.g., about 1000°C - 1100°C) need to be protected from the potentially damaging effects of such an environment. Turbine engine components are but one example. Various techniques have been devised to maintain the temperature of the engine components below critical levels. One approach calls for the incorporation of internal cooling channels or "passage holes" in the component, through which relatively cool air is forced during operation of the engine. For example, the holes may extend from the cooler surface of an airfoil to a "hot" surface which is exposed to the elevated temperatures. Cooling air (usually provided by the engine's compressor) is fed through the holes from the cooler surface to the hot surface. As long as the holes remain clear, the rushing air will assist in lowering the temperature of the hot metal surface and preventing melting, oxidation, or other degradation of the component.

The high temperature components are also frequently covered by specially-formulated protective coatings. These coatings, often referred to as thermal barrier coatings or "TBC's", effectively increase the operating temperatures of the alloys. Many of the protective coatings are ceramic-based, e.g., based on a material like zirconia (zirconium oxide). The coatings are frequently applied over an intervening bond layer, like those formed of aluminide, platinum aluminide, MCrAIY (where "M" is usually iron, nickel, or cobalt), or similar types of metallic coatings. When the TBC and the bond layer are exposed to heat in an oxidizing environment, an interlayer of alumina is formed between the bond layer and the TBC. (The TBC and the bond layer are sometimes collectively referred to herein as the "TBC system").

When a protective coating on an engine component becomes worn or damaged, it must be carefully repaired, since direct exposure of the underlying substrate to excessive temperature may eventually cause the component to fail and damage other parts of the engine. The periodic overhaul of the TBC system usually involves complete removal of the TBC, followed by re-coating with fresh TBC. If the bond layer has been damaged, it is also removed and replaced. However, repeated removal of the bond layer is usually not permissible because of detrimental effects to the component, e.g., thinning of the component walls.

Various methods have been used to remove the TBC layer for eventual re-coating. Examples include grit blasting, water-jet treatment, and caustic autoclave treatment. While such techniques are often effective for removing the TBC, there are sometimes problems associated with their use. For example, these techniques sometimes fail to remove the TBC from the passage holes. Moreover, even if the TBC is removed from the holes, the aggressive character of some of these removal techniques can result in other problems. For example, grit blasting is often difficult to control, and may cause damage to the bond layer after the TBC has been removed. Uncontrolled grit-blasting can also damage the substrate, "eating" into its thickness and thereby changing critical dimensions of the component.

In U.S. Patent 5,643,474 of D. Sangeeta, a wet chemical process for removing TBC coatings from the surface of a metal alloy component is described. The process involves treating the coated surface in an autoclave with an organic caustic solution. Temperature, pressure and time conditions are specifically maintained to completely remove the TBC without damaging the underlying bond layer or substrate surface.

The process in the Sangeeta patent is very effective for removing TBC material from flat and contoured surfaces. However, it is sometimes not as effective at removing the TBC material from the inner surface of cooling passage holes in the component, or from the component surface immediately adjacent the hole, i.e., at the "rim" of the hole. The interlayer of alumina between the TBC and the bond layer may be removed, but residual TBC material often remains in the hole. This TBC residue, which may tightly adhere to the sides of the hole, must be removed by an additional step, e.g., a mechanical technique which loosens the residue. However, the additional step may detract from the overall efficiency of the process.

Thus, new techniques for removing a coating, such as a TBC, from holes would be a useful addition to this area of technology. The techniques should be efficient and not labor-intensive. They should also preserve the integrity of the metal alloy surface and any bond layer remaining on the surface during the coating repair stage.

### SUMMARY OF THE INVENTION

One embodiment of this invention is a method for removing a coating from the surface of at least one hole located within a metal-based substrate. The method comprises the step of treating the substrate with a coating removal solution while rapidly agitating the substrate or the solution. Agitation of the substrate can be carried out by the use of a transducer and an associated waveguide. Various types of transducers or motion generators can be used, e.g., an ultrasonic device, or a motor which drives a shaking apparatus.

The transducer can be used to provide direct agitation or indirect agitation. An example of direct agitation involves shaking the substrate at the same time it is being treated with the coating removal solution, utilizing a shaking apparatus. In an illustrative indirect-agitation process, vibrational energy is provided to the coating removal solution in which the substrate is immersed. The source of the vibrational energy is often at least one ultrasonic device.

The composition of the coating-removal solution depends on the composition of the coating itself. When the coating is a ceramic-based material like a TBC, the coating-removal solution is usually a caustic composition, as further described below. Caustic compositions of this type usually comprise a base and water, and optionally, an organic compound.

The substrate being treated according to this invention often contains a row or array of holes covered by the coating. As further described below, the process is effective for removing the coating from the interior of the holes, as well as from the surrounding surface of the substrate. In some embodiments, the substrate is ultrasonically agitated in an aqueous solution (e.g., without pressure or the use of the coating removal solution), after being treated with the coating removal solution. This additional ultrasonication step sometimes increases the number of holes which are cleaned.

A method for repairing a worn or damaged coating on a substrate which contains holes is also described. The method uses the treatment described above, and enhances the overall repair process. Another embodiment is directed to the removal of an overcoat, e.g., a TBC, without substantially removing or damaging an underlying coating, e.g., a bond layer.

A related article is also described, comprising:
(a) a pressure vessel containing a solution which is capable of removing at least a portion of a coating from the surface of a turbine engine substrate immersed in the solution; and
(b) means for rapidly agitating the substrate or the solution surrounding the substrate. The agitation means are more fully described in the remainder of the specification, along with details regarding other features of this invention.

### BRIEF DESCRIPTION OF THE DRAWINGS

FIG. 1 is an elevational view in partial cross-section of a shaking device and pressure vessel for containing the coating removal solution.

FIG. 2 is a portion of a view similar to FIG. 1, but of an alternative embodiment of the invention.

FIG. 3 is an elevational view in partial cross-section of another embodiment of the invention, utilizing a pressure vessel and an ultrasonic device.

### DETAILED DESCRIPTION OF THE INVENTION

Many different types of coatings can be removed from holes by the present invention. The holes extend into or through substrates formed of any metallic material or alloy. Usually, the substrate is formed from a heat-resistant alloy designed for high-temperature environments. As defined herein, "metal-based" refers to substrates which are primarily formed of metal or metal alloys, but which may also include some non-metallic components, e.g., ceramics, intermetallic phases, or intermediate phases. Many of the heat-resistant materials are referred to as "superalloys", and they typically have an operating temperature of up to about 1000-1150°C . The term "superalloy" is usually intended to embrace complex iron-, cobalt- or nickel-based alloys (e.g., those containing at least about 40% by weight of the base metal), which include one or more other elements such as aluminum, tungsten, molybdenum, chromium, titanium, or iron.) Superalloys are described in various references, such as U.S. Patents 5,399,313 and 4,116,723, both incorporated herein by reference. Illustrative nickel-base alloys are designated by the trade names Inconel®, Nimonic®, Rene® (e.g., Rene® 80-, Rene® 95 alloys), and Udimet®. While the type of substrate can vary widely, it is often in the form of a jet engine part, such as the combustor liner or combustor dome, buckets, nozzles, blades, or vanes of a turbine engine.

The holes which are in the substrate usually (but not always) extend from one surface to another surface, and may constitute a variety of shapes. Very often - especially when used as cooling passageways in some sort of engine part - most of the holes are substantially circular, thus having a cylindrical shape through the body of the substrate. The diameter of the holes is often in the range of about 5 mils (127 microns) to about 500 mils (1.27 cm). (1 mil = 0.001 inch). In some embodiments, the diameter is in the range of about 5 mils (127 microns) to about 100 mils (0.25 cm). The holes may be substantially perpendicular to the substrate surface, or they may be situated at an angle relative to the surface. This orientation of the holes will of course depend on their function. The depth of the hole for that type of end use (i.e., the "length" of a hole) is usually in the range of about 50 mils (1270 microns) to about 700 mils (1.78 cm).

The coatings which can be removed according to this invention are oxide-based or ceramic-based. In the case of turbine engine components, protective coatings (e.g., TBC's) such as zirconium oxide are usually applied over the entire hot surface, as mentioned previously. Various techniques can be used for deposition, such as physical vapor deposition (PVD) or air plasma spray (APS), both of which are well-known in the art. Chemically-stabilized coatings are often used, such as yttria-stabilized zirconia, calcia-stabilized zirconia, magnesia-stabilized zirconia, and mixtures thereof. These types of protective coatings are often applied over an intervening bond layer, which is frequently metal-based. Exemplary bond layers are aluminum, platinum-aluminum, aluminum-nickel, nickel-chromium-aluminum-yttrium, iron-chromium-aluminum-yttrium, cobalt-chromium-aluminum-yttrium, and nickel-cobalt-chromium-aluminum-yttrium. Some of these bond layer materials have the formula "MCrAIY", where "M" is usually iron, nickel, or cobalt, or any mixture thereof.

The bond layer usually has a thickness in the range of about 25 microns to about 500 microns, and most often, in the range of about 35 microns to about 300 microns. In general, the thickness of the TBC is in the range of about 75 microns to about 1500 microns, and most often, in the range of about 75 microns to about 500 microns. For holes within the general dimensions provided above, the TBC usually covers (depth-wise) at least about 20 mils (508 microns) of the interior walls of the holes, as measured from the rim of the hole. More often, the coatings cover at least about 10 mils (254 microns) of the interior walls.

As mentioned above, the substrate can be rapidly agitated while it is treated with the coating removal solution. In preferred embodiments, the agitator should be capable of shaking the substrate at a frequency of at least about 35 cycles per second (i.e., 35 Hz). In especially preferred embodiments, the agitator should be capable of shaking the substrate at a frequency of at least about 50 Hz. Moreover, in some preferred embodiments, the agitator should include means suitable for attaching the substrate in a rigid position, relative to the motion of agitation. When attached in this manner, the vibrational energy of the transducer (e.g., a motor driving the agitator) is most efficiently transferred to the substrate. More of the coating material is often removed in such an instance, as compared to those instances in which the substrate is allowed to freely tumble or roll while being shaken.

Various techniques can be used to treat the substrate with the coating removal solution while it is being agitated. For example, the substrate can be continuously sprayed with the coating removal solution, using various types of spray guns. A single spray gun could be employed. Alternatively, a line of guns could be used, and the agitated substrate could pass alongside or through the line of guns (or multiple lines of guns). In another alternative embodiment, the coating removal solution could be poured over the substrate and continuously recirculated, while the substrate is agitated. (These alternatives may be appropriate in those cases in which an autoclave is not being used.).

In preferred embodiments, the substrate is immersed in a bath of the coating removal solution during agitation. Immersion in this manner appears to permit the greatest degree of contact between the solution and the coating which is being removed. Most often, the coating removal solution is contained in a pressure vessel. A variety of pressure vessels may be employed. One type which is often used is the autoclave, a device built to withstand high temperatures, as well as high pressure. Pressure in the autoclave is elevated by heating the coating removal solution contained therein, or by using an external source of compressed gasses to over-pressurize the vessel. Further details regarding operation of the pressure vessel are provided below.

The type of coating removal solution will depend on the type of coating being removed. The solution should be capable of removing the coating without damaging the substrate. (As used herein, the term "solution" is meant to include pure solutions according to a chemical definition, as well as single component liquids, e.g., an acid or base, or liquid "mixtures" of components. For simplicity, the removing-substance will be referred to hereinafter as a "solution".)

The coating-removal composition is preferably a caustic solution. A variety of aqueous or non-aqueous caustic solutions may be employed. Some of them are described in U.S. Patent 5,643,474, and in U.S. Patent Application S.N. 09/211,484 of T. Cartier et al (filed December 15, 1998 as Attorney Docket RD-26,416). Both of these references are incorporated herein by reference. Many of them are organic, and comprise a mixture of water and a basic compound, such as a hydroxide base.

Examples of the basic compounds include sodium hydroxide, potassium hydroxide, ammonium hydroxide, triethylamine, tetramethylammonium hydroxide, and lithium hydroxide. Mixtures which comprise two or more of such compounds could also be utilized. Various other additives which reduce surface tension may also be present in the caustic solution, such as conventional surfactants and chelates.

The weight ratio of base to water in the caustic solution may range from about 30 : 70 to about 45 : 55. The overall concentration of the base in the caustic solution may range from very dilute, e.g., about 1 wt. %, to very concentrated, e.g., about 65 wt. %, based on total weight of the caustic solution.

In some embodiments of the invention, the caustic solution further includes an organic compound. The organic compound is usually one which reduces the surface tension of the solution. Non-limiting examples include alcohols such as methanol, ethanol, propanol, and isopropyl alcohol; as well other compounds, such as acetone, liquid carbon dioxide, or liquid ammonia. Mixtures of two or more of any of these compounds can also be used. The amount of organic compound will depend on various factors, such as the type and thickness of the coating being removed; as well as the size of the substrate and the size of the pressure vessel. (Those skilled in the art understand that the organic compound may sometimes be a basic compound as well, e.g., tetramethylammonium hydroxide. In such an instance, an additional organic compound is contemplated for this embodiment).

For a caustic solution which comprises the three components mentioned above, the base is usually present at a level of about 1% by weight to about 65% by weight; the water is usually present at a level of about 1% by weight to about 80% by weight; and the organic compound is usually present at a level of about 1% by weight to about 98% by weight. In some preferred embodiments, the base is present at a level of about 10% by weight to about 25% by weight; the water is present at a level of about 15% by weight to about 30% by weight; and the organic compound is present at a level of about 45% by weight to about 75% by weight. Adjustment of the relative amounts of water, base, and the organic compound can be carried out by observing the effect of particular mixtures on coating removal from the substrate surface and the hole surface.

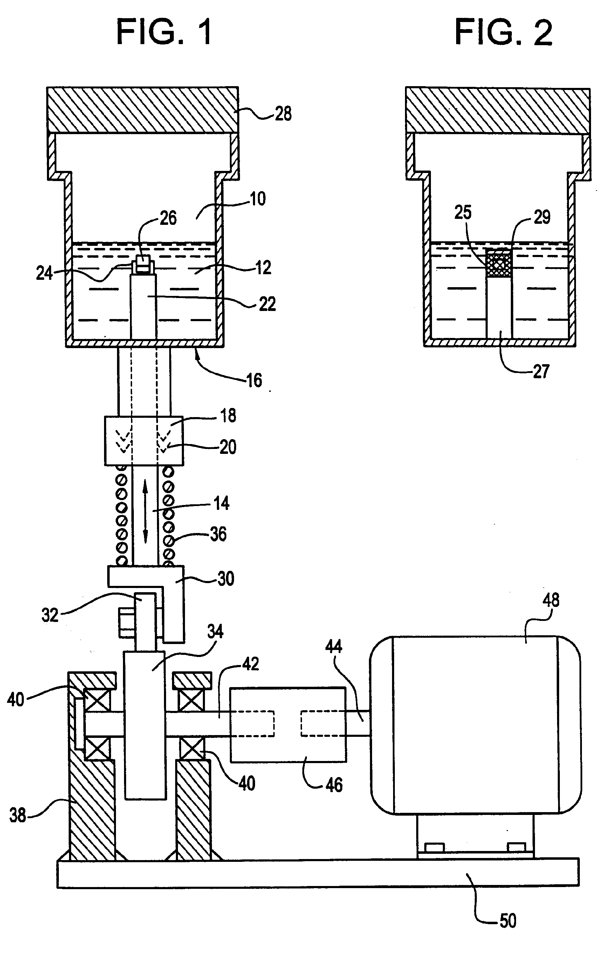

According to one embodiment, direct agitation is used. In other words, the substrate is in physical contact with an agitating element, e.g. an oscillating shaft or cage-like enclosure, as described below. FIG. 1 depicts an exemplary apparatus for carrying out a direct agitation step. Pressure vessel 10 contains and confines coating removal solution 12. In preferred embodiments, vessel 10 is an autoclave, as mentioned above. A reciprocating shaft 14 extends into vessel 10 through an opening at the bottom 16 of the vessel. Alternatively, the reciprocating shaft could extend into vessel 10 through an opening in another location, e.g., the sides of the vessel.

Shaft 14 is partially enclosed by a shaft housing 18, which is attached to vessel bottom 16. Shaft seal element 20 is installed within the shaft housing 18, and prevents the leakage of any coating removal solution 12 during the movement of the shaft. The seal is usually a flexible material formed of rubber, silicone, Teflon® material, and the like. (Various types of seals can be used. For example, a bellows seal, as described below for another embodiment, could be used in place of the seal element depicted in FIG. 1). Reciprocating shaft 14 can be thought of as the "waveguide" of a transducer. The upper end 22 of the shaft can be thought of as the "waveguide terminus".

Upper end 22 of shaft 14 contains holding means 24 for holding substrate 26. Various types of holding means are possible. As an example, element 24 can be a bracket or clamp. Alternatively, it could be a basket or cage-like enclosure. The openings in the enclosure would be large enough to permit the caustic solution to flow freely therethrough, but small enough to keep the substrate from passing out of the enclosure. The substrate would be placed in the cage, and allowed to tumble freely while being agitated. The substrate can be inserted in pressure vessel 10 and appropriately positioned or attached by opening removable cover 28, prior to filling the vessel with the coating removal solution.

In preferred embodiments, the holding means must be capable of maintaining the substrate in a rigid position relative to the motion of the waveguide, while it is being shaken. FIG. 2 depicts one means for rigidly holding the substrate. (The figure is meant to be identical to FIG. 1 in all aspects, with the exception of the holding means). In FIG. 2, holding means 25 is a grate attached to the upper end of shaft 27. Substrate 29 can be bolted or clamped to the shaft, for example. (The bolts or clamps should not cover any of the coating material being removed from the surface of the substrate). Other techniques for rigidly attaching the substrate to the end of the shaft are also possible, and would be apparent to those skilled in the art.

Returning to a review of FIG. 1, the lower end of the shaft, i.e., "shaft base" 30, is movably attached to cam follower 32. Cam follower 32 is a type of bearing which contacts cam 34 and rolls against the cam while the cam itself rotates, as described below. Pre-loading spring 36 provides a pressure-bias for cam follower 32 against the surface of cam 34, to keep the two elements in contact with each other as the cam rotates. (The pressure which results during operation of pressure vessel 10, e.g., the autoclave, is transmitted thorough shaft 14, and also serves to provide a pressure bias between elements 32 and 34.).

Cam 34 operates in a conventional manner for such a component, imparting reciprocating or "oscillating" motion to shaft 14. The cam is usually supported in cam base 38 by ball bearings 40. Cam shaft 42 extends through the planar-center (or near the planar-center) of cam 34. The cam shaft is attached to drive shaft 44 by way of shaft coupling 46. (Other means of engaging a cam shaft with a drive shaft would be apparent to those skilled in the art). Drive shaft 44 extends from drive motor 48, and rotates in a conventional manner by the action of the drive motor. A wide variety of motors may be used, provided that they provide the power (e.g., 1/10 to 1/2 horsepower) required for the desired movement of the reciprocating shaft. The combination of the drive motor, drive shaft, shaft coupling, cam shaft, cam, and cam follower can be thought of as the "transducer" in this embodiment, producing the necessary vibrational motion. The entire apparatus is usually mounted on a suitable, firm platform 50.

After the substrate has been positioned by holding means 24 within pressure vessel 10, the appropriate type of coating removal solution can be introduced into the vessel. When drive motor 48 is turned on, the spinning drive shaft 44 spins cam shaft 42, resulting in rotation of cam 34. Rotation of the cam results in reciprocating action by reciprocating shaft 14. The motion of shaft 14 causes rapid agitation of substrate 26 within pressure vessel 10. Selection of an appropriate speed for the drive motor results in the desired level of agitation. The duration of the agitation will depend on a variety of factors discussed herein. For a pressure vessel having a size of about 0.5 liter to about 10 liters, the agitation time will usually range from about 5 minutes to about 10 hours.

Temperature and pressure levels within the pressure vessel, as well as treatment times, can vary. Some of the factors involved in selecting these parameters are the amount and type of coating being removed; the operating capabilities of the vessel; and the particular type of caustic solution being employed. As an example, the pressure in the vessel can range from about 100 psig to about 3000 psig. The temperature is usually in the range of about 175°C to about 300°C, but can be as low as about 150°C. Higher pressures and temperatures may be used to achieve shorter process times. As another alternative, the treatment can be initiated at zero pressure, while increasing the temperature of the coating removal solution. The increase in temperature causes an increase in pressure within the vessel as the vapor pressure of the solution is increased.

Other means of direct agitation may also be used. Generally, the apparatus should be capable of shaking the substrate at the desired frequency, e.g., at least about 35 Hz. It should also be understood that agitation of the substrate may involve various types of motion. For example, the motion may be longitudinal, wherein a shaft repeatedly moves the substrate up and down, or in some other oscillating motion. The motion could alternatively be torsional, e.g., an oscillating, twisting motion. As another alternative, the motion could be lateral. For example, the substrate could "rock" back and forth at the end of a shaft which moves like a lever. More specifically, the fulcrum of the lever could be located at the opening of a pressure vessel like that depicted in FIG. 1, and the opposite end of the lever (outside the pressure vessel) could be set into motion to provide the required agitation. The choice of a particular type of motion for the substrate being agitated will depend on various factors discussed herein, e.g., the type of substrate; the type of coating being removed from holes in the substrate; and the equipment which is available in a given situation.

In another embodiment of the invention, the substrate is indirectly agitated. Generally, this embodiment involves the agitation of the chemical solution surrounding the substrate, thereby causing the substrate to move - usually (but not necessarily) in an oscillating motion. An ultrasonic technique is often very useful for this embodiment. Ultrasonic techniques are known in the art and described, for example, in Kirk-Othmer's *Encyclopedia of Chemical* *Technology,* 3rd Edition, Vol. 23, pp. 462-469; *The New Encyclopedia Britannica,* Vol. 27, pages 573 et seq; and in the *Encyclopedia Americana,* Vol. 27, pages 353 et seq, all of which are incorporated herein by reference. These techniques typically employ an ultrasonic device, which usually includes a transducer to produce the ultrasonic vibrations. Mechanical transducers may be employed, e.g., those that are pneumatically- or hydraulically-driven.

In preferred embodiments, electromechanical transducers are employed. Examples include piezoelectric and magnetostrictive devices. As one specific example, a piezoelectric is used, converting an oscillating electric field applied to the crystal into a mechanical vibration. The waveguide or "horn", which is attached to the transducer, is usually formed of a corrosion-resistant material. (In practice, only the portions of the waveguide which are to be in contact with the coating removal solution usually need to be formed of such a material). Examples of suitable corrosion-resistant materials are nickel-based alloys or nickel-copper-based alloys like the Inconel® or Monel® products. The waveguide may be in a variety of shapes, such as cylindrical rods or tapered cylindrical rods.

In one embodiment of the invention, the entire ultrasonic device, e.g., the transducer, waveguide, and waveguide terminus, can be located within the pressure vessel. For example, the device could be attached to the interior wall of the vessel or at some other location within the coating removal solution. The device, including any electrical attachments, must be formed of materials that can withstand operating temperatures of at least about 150°C, and can withstand the caustic environment within the vessel.

In more preferred embodiments, the transducer and at least a portion of the waveguide are located outside the pressure vessel, while the waveguide terminus is situated inside the pressure vessel. The waveguide would extend through a suitable opening in the vessel.

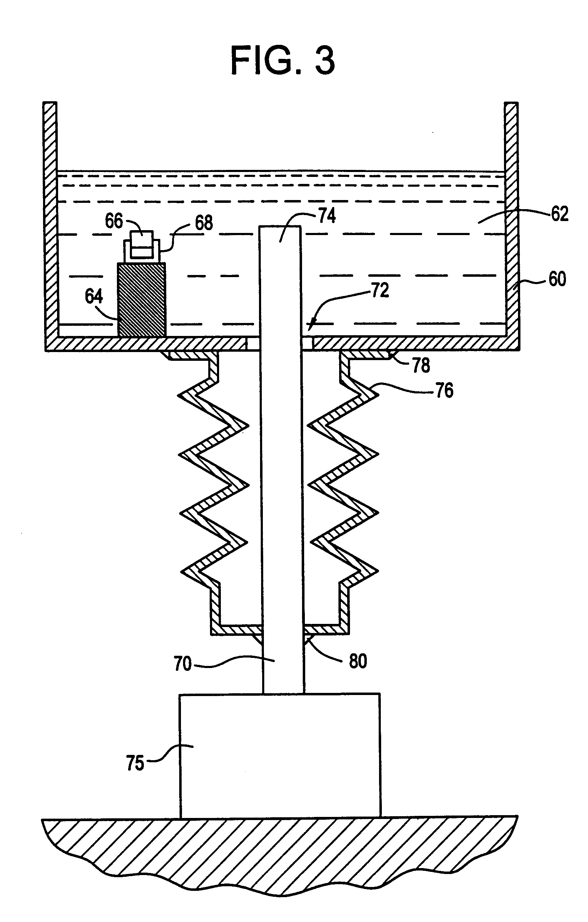

FIG. 3 depicts, in simplified form, an exemplary apparatus for carrying out indirect agitation using an ultrasonic device. Pressure vessel 60, which is preferably an autoclave, contains and confines coating removal solution 62, as in FIG. 1. Platform 64 supports substrate 66 by way of holding means 68. (A basket or cage-like enclosure could also be used to contain the substrate). Other means of situating the substrate in the pressure vessel could alternatively be used. For example, the substrate could be held by a bracket extending from the inner surface or cover of the pressure vessel.

Waveguide 70 extends through vessel opening 72, and includes waveguide terminus 74. The position of the waveguide terminus within pressure vessel 60 will depend on various factors, such as the position of the substrate(s) within the vessel, as well as ultrasonic considerations, e.g., frequency and amplitude. The end of waveguide 70 which is opposite to terminus 74 is usually directly connected to ultrasonic transducer 75. The waveguide does not have to extend through the bottom of the pressure vessel. For example, it could extend into the vessel through an opening in another location, e.g., the sides of the vessel.

A bellows seal 76 can be used to seal vessel opening 72 and prevent the escape of coating-removal solution 62 or associated vapors. This type of seal is generally known in the art, and is usually formed from concentric, substantially cylindrical sections of a flexible material like Inconel® alloys, Monel® alloys, or stainless steel. The concentric sections usually vary in diameter, e.g., alternating between relatively small diameters of about 2.2 cm (7/8 inch), and relatively large diameters of about 2.86 cm (1 1/8 inch). The structure of the bellows seal allows its length to be expanded or contracted to accommodate the motion of the transducer and waveguide. An opening of the bellows seal is mechanically attached to the vessel opening, e.g., by welding at weld site 78. Another portion of the seal is attached to the surface of the waveguide, e.g., by welding at weld site 80, as shown in FIG. 3.

While the bellows seal is often preferred, other means for providing a seal between the vibrating waveguide and the vessel opening would also be possible. As an example, other types of flexible seals made from materials like rubbers, silicones, or polytetrafluoroethylene could be used, as described in reference to an earlier embodiment. The seal should allow the vibrating element to vibrate freely, without any significant dampening effect that would adversely affect the operation of the ultrasonic device.

As described above, the temperature of coating removal solution 62 is usually quite high during operation of the pressure vessel. Therefore, the waveguide may have to be cooled, to ensure that the transducer does not overheat. Those skilled in the art are familiar with techniques for cooling the waveguide. As one example, flexible cooling coils through which a coolant is circulated could be wrapped around the waveguide. (Any dampening effect that the cooling coils would have on the vibrating waveguide could be compensated for by adjustment of the operating parameters of transducer 75).

Many of the other details in regard to operation of the ultrasonic device are known in the art. The device would operate at a frequency sufficient to provide a desired amount of agitation to the substrate. Usually, the frequency is in the range of about 10 kHz to about 100 kHz. The sound waves within the ultrasonic tank can produce a cavitation effect, which can improve the agitation and efficiency of the cleaning solution. Selection of the most appropriate type of transducer, vibrating element, and operating parameters (e.g., frequency and duration of agitation) can be made by evaluating test samples which require coating removal from holes within the samples. Adjustment of the ultrasonic parameters (as well as the parameters for any type of agitation) will also be influenced by the type of coating removal solution being employed. Usually, the ultrasonic agitation is carried out for a period of from about 5 minutes to about 10 hours.

It should be understood that more than one ultrasonic device could be used. Each device could extend into the coating removal solution through its own opening in the pressure vessel. The positions and movement (e.g., frequency and orientation) of multiple vibrating elements can be coordinated so as to maximize their cavitation or cleaning effect. Coordination of the various devices helps to ensure uniform ultrasonic energy density in all regions of the solution in the pressure vessel.

Other means of indirect agitation may alternatively be used, as long as the agitation apparatus which is employed is capable of shaking the substrate at the desired frequency, e.g., at least about 35 Hz. As one example, the pressure vessel could be situated on a vibrating table, as described in the examples below. The vibration of the table will provide the necessary agitation of the chemical solution in which the substrate is immersed. Those skilled in the art can select the most appropriate vibrating table (and its operating parameters), based on the various factors discussed herein.

In some embodiments of this invention, an additional ultrasonication step is carried out after the substrate has been rapidly agitated while being treated with the coating removal solution. As one illustration, a substrate which has been agitated in the coating removal solution in an autoclave (as described previously) can then be removed from the autoclave and rinsed with water. The substrate can then be immersed in water, or in another suitable liquid or solution. The immersion is carried out in an appropriate vessel which can accommodate a conventional ultrasonic device, e.g., the device mentioned previously, or the one described in a following example. As one exemplary alternative, an ultrasonic bath could be used.

The ultrasonic device is usually operated at the frequencies described above for an ultrasonic device used in the pressure vessel, i.e., about 10 kHz to about 100 kHz. The duration of the ultrasonication treatment will depend on various factors, such as the amount of coating which was not removed in earlier steps, and the size and shape of the substrate. Usually, the time period will range from about 5 minutes to about 10 hours. In some instances, this additional ultrasonication step increases the number of holes which are cleaned, i.e., in which the coating is satisfactorily removed. The step can be carried out after any of the direct or indirect methods of agitation has been completed, e.g., after the use of the shaking device or the ultrasonic device during treatment within the coating removal solution.

Another embodiment of this invention is directed to an apparatus, comprising:
(a) a pressure vessel containing a solution which is capable of removing at least a portion of a coating from the surface of a turbine engine substrate immersed in the solution; and
(b) means for rapidly agitating the substrate or the solution surrounding the substrate.

As described previously, the agitation means can be a mechanical shaking device or an ultrasonic device, and the pressure vessel is usually an autoclave. The substrate is often a portion of a turbine engine, e.g., an aircraft engine or a land-based turbine. As described previously, such a substrate contains passage holes, from which a thermal barrier coating like yttria-stabilized zirconia sometimes has to be removed. In such an instance, the coating removal solution is usually a caustic composition.

The following examples are merely illustrative, and should not be construed to be any sort of limitation on the scope of the claimed invention.

### EXAMPLE 1

This example describes an embodiment of the invention which includes direct agitation of the substrate during treatment with the coating-removal solution. In this example, each substrate was an airfoil, formed from a nickel-base superalloy. The substrates had been grit-blasted and then covered with a bond coat (i.e., "bond layer"). The bond coat was either a pack platinum-aluminide coating or a vapor-pack platinum-aluminide coating, depending on the sample, and had an average thickness in the range of about 25 microns to about 75 microns. In multiple trial runs, it did not appear that the difference in bond coat deposition technique had any effect on the results herein. The TBC was applied over the bond coat, using standard PVD equipment. The average thickness of the TBC was in the range of about 100-180 microns.

The substrate contained a number of rows of holes which extended through its thickness. The holes had an average diameter of about 0.51 mm. Most of the holes were inclined, e.g., at an angle of about 20 degrees relative to the surface of the substrate, although some of them were substantially vertical to the substrate surface.

A caustic solution containing 20 g NaOH, 20 g water, and 60 g ethanol was stirred, resulting in a clear solution. The solution was poured into a 0.5 liter Monel® autoclave, along with the substrates. The autoclave was then sealed with nitrogen and pressurized at 1000 psig. The apparatus was checked after an hour, to ensure that there was no drop in pressure. The autoclave was then depressurized to 1 atmosphere. The temperature was raised to 250°C, which resulted in a pressure rise to 1000 psig.

When the desired temperature and pressure levels were reached, agitation of the autoclave was initiated. Agitation was carried out by the use of a vibrating table from FMC Syntron (Model J-50-8). The vibrating table operated at full power (maximum current of 4 amps) and 60 Hz. Agitation was carried out for 60 minutes. After the autoclave was cooled and the pressure released, the samples were removed. One set of samples was then cleaned with water, followed by cleaning with isopropyl alcohol. Another set of samples was neutralized with an acid to remove residual sodium hydroxide.

The process described above removed all of the TBC material from a substantial number of holes in the substrate. The number of holes that were cleaned ranged from about 20% to 50%. (The effectiveness of the process thus varied somewhat from part-to-part).

The substrate and the bond coat were not damaged in any way by the process, in contrast to prior art methods. Furthermore, the TBC material from the other surfaces of the airfoils (e.g., on the surfaces above the holes) was also successfully removed.

### EXAMPLE 2

This example was similar to Example 1, except that agitation was provided by a motor-driven cam apparatus, substantially identical to that of FIG. 1. Moreover, a 1 gallon-size (3.785 liters) autoclave was used, and the ingredients of the caustic solution were scaled up proportionally. The cam was designed with five lobes, to provide 10 mil-vertical movement, up to a frequency of about 120 Hz. A number of samples were tested. They were the same type of Ni-base airfoils used in Example 1, coated with the same types (and approximate thicknesses) of bond coat and TBC. The results are presented in Table 1.

**Table 1**

| Sample #* | Sample Location | Temp. (°C) | Pressure (psig) | Time (min) | Freq. (Hz) | Results |
|---|---|---|---|---|---|---|
| 1 | Loose on top of mesh attached to agitating shaft | 250 | 996 | 30 | 30 | No holes cleaned |
| | | | | | | |
| 2 | Attached to the agitating shaft | 250 | 1000 | 40 | 40 | 17% of holes cleaned |
| | | | | | | |
| 3 | Same blade, same loccation | 220 | 600 | 15 | 80 | 47% of holes cleaned |
| | | | | | | |
| 4 | Attached to the agitating shaft | 250 | 1046 | 120 | 60 | 5% of holes cleaned |
| | | | | | | |
| 5 | Loose in a steel beaker attached to agitating shaft | 200 | 425 | 30 | 40 | 33% of holes cleaned^{a} |
| | | | | | | |
| 6 | Loose on topof mesh attached to agitating shaft | 250 | 1037 | 60 | 60 | No holes cleaned |
| | | | | | | |
| 7 | Attached to the bottom of the mesh (bolted to shaft) by wire. | 250 | 1104 | 120 | 60 | 70% of holes cleaned^{a} |
| | | | | | | |
| 8 | Loose on top of the mesh | 250 | 1104 | 120 | 60 | 23% of holes cleaned |

| | | | | | | |
|---|---|---|---|---|---|---|
| ∗ Weight of each sample: Sample 1: 275 g; sample 2 (same as sample 3): 75 g; sample 4: 275 g; sample 5: 75 g; sample 6: > 300 g; sample 7: 75g; sample 8: 75 g. | | | | | | |
| (a) Remaining TBC remained deep in the holes; i.e., greater than about 1 mm from the top. | | | | | | |

The above results demonstrate that the present invention is capable of successfully removing TBC-type material from holes in a metal substrate. The rigid attachment of the substrate to the agitating shaft resulted in a greater percentage of holes being cleaned. No evidence of damage to the substrate or the bond coat was observed.

As described in example 1, the percentage of holes which were cleaned varied somewhat from part-to-part. It is possible that the variation was due in part to the size or weight of the substrate. The variation could also have resulted from the manner in which the TBC material was initially applied to the substrate, and/or the thermal "history" of the substrate during use, e.g., as an aircraft engine or land-based turbine engine.

In another comparison, nickel-base substrates which contained holes were again used. The holes were coated with bond coat and TBC material. The substrates were treated in a caustic removal solution maintained at a temperature of about 250°C, and a pressure of about 900-1000 psig. In this example, there was no agitation. On average, about 19% of the holes were cleaned.

### EXAMPLE 3

In another experiment, nickel-base substrates (which contained holes coated with bond coat and TBC material, as in Example 1) were first treated in a caustic removal solution, without any agitation. The treatment was carried out for about 30-60 minutes, at a temperature of about 250°C. That step was followed by agitation of the parts in water, at room temperature. The TBC material was not removed from the holes in this two-step process. When the temperature of the bath for the agitation was raised to 250°C, the TBC still was not removed from the holes.

### EXAMPLE 4

Another set of nickel-base substrates (which contained holes coated with the bond coat and the TBC material described above) were individually treated in a first step according to Example 2, i.e., they were agitated within the coating-removal solution in the autoclave. Agitation was carried out by using the vibrating table mentioned in Example 1.

In a second step, each substrate was removed from the autoclave and rinsed with water. The substrates were then individually immersed in deionized water within a stainless steel beaker (about 1200 ml in size). An ultrasonic horn was also immersed in the liquid. The horn was designated as model W-370, available from Heat Systems Ultrasonics. The horn had a standard, tapered tip, which was situated about 2.54 cm (1 inch) from the bottom of the beaker, and about 3.8 cm (1.5 inches) from the substrate. The horn supplied about 375 watts average output power. It was operated at about 20 kHz (maximum power) for 5 minutes.

Following the ultrasonication step, the percentage of holes that were cleaned ranged from greater than about 50% to about 90%. Thus, in some embodiments, the additional step of conventional ultrasonication further enhanced removal of the TBC material from the holes.

This invention has been shown and described with respect to some of the preferred embodiments. However it will be understood by those skilled in the art that various changes in form and detail thereof may be made without departing from the spirit and scope of the claimed invention.

All of the patents, articles, and texts mentioned above are incorporated herein by reference.

For completeness, various aspects of the invention are set out in the following numbered clauses:
1. A method for removing a coating from the surface of at least one hole located within a metal-based substrate (26), comprising the step of treating the substrate (26) with a coating removal solution (10) while rapidly agitating the substrate (26) or the solution (10).
2. The method of clause 1, wherein the agitation is carried out by shaking the substrate (26) at a shaking frequency of at least about 35 Hz.
3. The method of clause 1, wherein the agitation is carried out by shaking the substrate (26) at a shaking frequency of at least about 50 Hz.
4. The method of clause 2, wherein the substrate (26) is rigidly attached to an agitation device.
5. The method of clause 1, wherein the substrate (26) is agitated while being immersed in the coating removal solution (12).
6. The method of clause 5, wherein the coating removal solution (12) is contained in a pressure vessel.
7. The method of clause 6, wherein the pressure vessel (10) is an autoclave.
8. The method of clause 6, wherein the pressure which is maintained in the pressure vessel (10) is in the range of about 100 psig to about 3000 psig.
9. The method of clause 6, wherein the temperature in the pressure vessel (10) is at least about 150°C.
10. The method of clause 6, wherein the time period for which the substrate (26) is agitated is in the range of about 5 minutes to about 10 hours.
11. The method of clause 1, wherein agitation of the substrate (26) is carried out by providing vibrational energy to the coating removal solution (12) in which the substrate is immersed.
12. The method of clause 11, wherein the source of the vibrational energy is at least one ultrasonic device.
13. The method of clause 12, wherein the ultrasonic device produces ultrasonic waves of about 10 kHz to about 100 kHz in the coating removal solution (62).
14 The method of clause 11, wherein the ultrasonic device includes a piezoelectric or magnetostrictive transducer (75).
15. The method of clause 1, wherein the coating is ceramic-based.
16. The method of clause 15, wherein the ceramic-based coating comprises zirconia.
17. The method of clause 15, wherein the ceramic-based coating is a chemically stabilized zirconia-based coating selected from the group consisting of yttria stabilized zirconia, calcia stabilized zirconia, magnesia stabilized zirconia, and mixtures thereof.
18. The method of clause 15, wherein the coating removal solution (12) is a caustic composition.
19. The method of clause 18, wherein the caustic composition comprises water and a basic compound.
20. The method of clause 19, wherein the caustic solution further comprises an organic compound.
21. The method of clause 20, wherein the organic compound is a solvent selected from the group consisting of methanol, ethanol, propanol, isopropyl alcohol, acetone, liquid carbon dioxide, liquid ammonia, and mixtures of any of the foregoing.
22. The method of clause 19, wherein the basic compound is selected from the group consisting of sodium hydroxide, potassium hydroxide, lithium hydroxide, ammonium hydroxide, triethylamine, tetramethylammonium hydroxide, and mixtures thereof.
23. The method of clause 1, wherein the substrate (66) is ultrasonically agitated in a liquid after being treated with the coating removal solution (12).
24. The method of clause 23, wherein the ultrasonic agitation is carried out at a frequency in the range of about 10 kHz to about 100 kHz.
25. The method of clause 1, wherein the substrate (26) contains a row or pattern of the holes.
26. The method of clause 1, wherein a bond layer is disposed between the substrate (26) and the coating.
27. The method of clause 26, wherein the coating is removed without removing or damaging the bond layer.
28. The method of clause 1, wherein the metal-based substrate (26) is a superalloy.
29. The method of clause 1, wherein the metal-based substrate (26) is a component of a turbine engine.
30. A method for removing a coating from the surface of at least one hole located within a metal-based substrate (26), comprising the steps of:
   (a) rapidly agitating the substrate while it is immersed in a coating removal solution (12) within a pressure vessel; and then
   (b) ultrasonically agitating the substrate (26) in an aqueous solution.
31. The method of clause 30, wherein step (a) is carried out by shaking the substrate (26) with a shaking device, at a shaking frequency of at least about 35 Hz, while the substrate is rigidly attached to a shaking element (14, 22) of the shaking device.
32 A method for repairing a worn or damaged thermal barrier coating applied over a superalloy substrate (26) which includes at least one hole extending into the substrate, wherein the surface of the hole is at least partially covered with the coating, comprising the following steps:
   (a) removing the worn or damaged thermal barrier coating from the substrate (26) and the hole surface by treating the substrate with a coating removal solution (12), while rapidly agitating the substrate or the coating removal solution; and then
   (b) applying additional thermal barrier coating material over the substrate (26).
33. The method of clause 32, wherein the superalloy substrate (26) is a component of a turbine engine.
34. The method of clause 32, wherein the thermal barrier coating is zirconia-based.
35. The method of clause 32, wherein agitation of the substrate is carried out by providing vibrational energy to the coating removal solution (12) in which the substrate is immersed, using at least one ultrasonic device.
36. An article, comprising:
   (a) a pressure vessel (10) containing a solution (12) which is capable of removing at least a portion of a coating from the surface of a turbine engine substrate (26) immersed in the solution (12); and
   (b) means for rapidly agitating the substrate (26) or the solution (12) surrounding the substrate.
37. The article of clause 36, wherein the means for rapid agitation of the substrate (26) comprises a shaking device.
38. The article of clause 37, wherein the shaking device includes a waveguide (70) which rapidly agitates, and the substrate (66) is rigidly attached to the waveguide.
39. The article of clause 36, wherein the means for rapid agitation of the solution surrounding the substrate (66) comprises an ultrasonic device.
40. The article of clause 36, wherein the pressure vessel (10) is an autoclave.
41. The article of clause 36, wherein the coating on the turbine engine substrate (26) is a zirconia-based ceramic coating, and the coating removal solution (12) is a caustic composition.

## Claims

1. A method for removing a coating from the surface of at least one hole located within a metal-based substrate, comprising the step of treating the substrate with a coating removal solution while rapidly agitating the substrate or the solution.

2. The method of claim 1, wherein the agitation is carried out by shaking the substrate at a shaking frequency of at least about 35 Hz.

3. The method of claim 1 or claim 2, wherein the coating removal solution is contained in a pressure vessel.

4. The method of any preceding claim, wherein the source of the vibrational energy is at least one ultrasonic device.

5. The method of any preceding claim, wherein the coating removal solution is a caustic composition.

6. The method of any preceding claim, wherein the substrate is ultrasonically agitated in a liquid after being treated with the coating removal solution.

7. The method of any preceding claim, wherein a bond layer is disposed between the substrate and the coating.

8. A method for removing a coating from the surface of at least one hole located within a metal-based substrate, comprising the steps of:
(a) rapidly agitating the substrate while it is immersed in a coating removal solution within a pressure vessel; and then
(b) ultrasonically agitating the substrate in an aqueous solution.

9. A method for repairing a worn or damaged thermal barrier coating applied over a superalloy substrate which includes at least one hole extending into the substrate, wherein the surface of the hole is at least partially covered with the coating, comprising the following steps:
(a) removing the worn or damaged thermal barrier coating from the substrate and the hole surface by treating the substrate with a coating removal solution, while rapidly agitating the substrate or the coating removal solution; and then
(b) applying additional thermal barrier coating material over the substrate.

10. An article, comprising:
(a) a pressure vessel containing a solution which is capable of removing at least a portion of a coating from the surface of a turbine engine substrate immersed in the solution; and
(b) means for rapidly agitating the substrate or the solution surrounding the substrate.
